# EUROPEAN PATENT APPLICATION

(11) **EP 2 722 347 A1**
(43) Date of publication of application: **23.04.2014**
(21) Application number: 12189392.9
(22) Date of filing: 22.10.2012
(51) Int. Cl.: C08F 10/02, C08F 2/34, C08F 2/00

(54) **Multistage process for the polymerization of olefins**

(71) Applicant: Basell Polyolefine GmbH, 50389 Wesseling (DE)
(72) Inventor: Meier, Gerhardus, 60320 Frankfurt (DE); Schüller, Ulf, 60486 Frankfurt/M (DE); MEI, Gabriele, 44121 Ferrara (IT); Baita, Pietro, 45030 Occhiobello (IT); Marturano, Lorella, 44121 Ferrara (IT)
(74) Representative: Seelert, Stefan

(57) **Abstract**

Process for preparing a polyolefin polymer from one or more olefins by gas-phase polymerization at temperatures of from 40° to 150°C and pressures of from 0.1 to 20 MPa in the presence of a polymerization catalyst in a polymerization reactor cascade comprising a fluidized-bed reactor and a multizone circulating reactor, in which multizone circulating reactor the growing polymer particles flow upward through a first polymerization zone under fast fluidization or transport conditions, leave said first polymerization zone and enter a second polymerization zone through which they flow downward under the action of gravity, leave said downcomer and are reintroduced into the riser, thus establishing a circulation of polymer,
wherein the polymerization in the multizone circulating reactor is carried out in the presence of a combination of

- a hydroxyester having at least one free hydroxyl group, obtained from reacting a polyalcohol with a carboxylic acid having from 4 to 22 carbon atoms and
- an ethoxylated alkylamine or ethoxylated alkylamide comprising an alkyl group of from 2 to 20 carbon atoms

where the total amount of hydroxyester fed to the multizone circulating reactor and to any upstream polymerization reactor is from 3 to 300 ppm with respect to the total amount of olefins fed to the multizone circulating reactor and to any upstream polymerization reactor and the amount of ethoxylated alkylamine or ethoxylated alkylamide fed to the multizone circulating reactor and to any upstream polymerization is from 5 to 1000 ppm with respect to the total amount of olefins fed to the multizone circulating reactor and to any upstream polymerization reactor.

## Description

The present invention relates to a process for preparing a polyolefin polymer from one or more olefins by gas-phase polymerization at temperatures of from 40°to 150°C and pressures of from 0.1 to 20 MPa in the presence of a polymerization catalyst in a polymerization reactor cascade comprising a fluidized-bed reactor and a multizone circulating reactor, in which multizone circulating reactor the growing polymer particles flow upward through a first polymerization zone under fast fluidization or transport conditions, leave said first polymerization zone and enter a second polymerization zone through which they flow downward under the action of gravity, leave said downcomer and are reintroduced into the riser, thus establishing a circulation of polymer.

The polymerization of olefins in a cascade of two or more serially connected gas-phase reactors allows to produce olefin polymers with improved properties and/or to simplify the existing production processes. This is made possible by choosing polymerization conditions in the second reactor or subsequent reactors different from the reaction conditions existing in the first polymerization reactor. Typically, olefin polymers grow on particles including a catalyst component, which continues to exert a catalytic activity even when the polymer particles are transferred to a successive gas-phase reactor. The polymer resulting from the first gas-phase reactor is transferred to the second gas-phase reactor, where polymerization is continued under different conditions. Therefore, different fractions of polymer can grow on the same particle by maintaining a different composition of the gas-phase mixture in each reactor. Furthermore, gas-phase polymerization is a very economic possibility to produce polyolefin polymers in commercial scale.

Examples of polyolefins that may be produced by a multistage gas-phase process include broad molecular weight polyolefins, bimodal polyolefins and multimodal polyolefins which are all obtained by maintaining different concentrations of a molecular weight regulator, such as hydrogen, in each reactor.

WO 2005/019280 A1 discloses a process for preparing a broad molecular weight polyethylene by polymerizing ethylene in the presence of a polymerization catalyst in two steps in two gas-phase reactors having different concentrations of hydrogen, where at least one of the gas-phase reactors is a gas-phase reactor in which the growing polymer particles flow upward through a first polymerization zone under fast fluidization or transport conditions, leave said first polymerization zone and enter a second polymerization zone through which they flow downward under the action of gravity, leave said downcomer and are reintroduced into the riser, thus establishing a circulation of polymer.

In olefin polymerization processes carried out continuously in gas-phase, there is the need to face up to the formation of polymer agglomerates in the polymerization reactor. Polymer agglomerates can however have a negative impact on the operability of the polymerization reactors. They can, for example, disrupt the discharge of polymer from the reactor by plugging the polymer discharge valves. They may further also partially cover the fluidization grid of the reactor with a loss in the fluidization efficiency.

Several solutions have been proposed to resolve the problem of forming agglomerates during a gas-phase polymerization process. These solutions include the deactivation of the fine polymer particles, the control of the catalyst activity and, above all, the reduction of the electrostatic charge by introducing antistatic agents inside the reactor.

US 5,410,002, for example, discloses a polymerization process in which antistatic compounds are used to eliminate or reduce the build-up of polymer particles on the walls of a gas-phase polymerization reactor. These antistatic compounds are capable of selectively inhibiting the polymerization on polymer particles smaller than 850 µm, the latter being responsible for fouling problems and polymer sheeting. Those antistatic/anti-fouling compounds are preferably selected among alklydiethanolamines.

WO 03/033543 A1 describes to a process for the gas-phase polymerization of olefins in a fluidized-bed reactor in which fouling is prevented and/or flowability of polymer is improved by using a process aid additive in combination with hydrogen peroxide, water and/or a salt.

WO 2012/041813 A1 refers to polyethylene extruded articles comprising an ethylene polymer obtained by a polymerization process carried out in the presence the products obtained by contacting a solid catalyst component, an aluminum hydrocarbyl compound, and a polyalcohol partially esterified with carboxylic acids with alkyl groups having at least 10 carbon atoms.

The simple addition of such antistatic/anti-fouling compounds is however not sufficient to establish a long-term reliable operation of a reactor cascade comprising a fluidized-bed reactor and a multizone circulating reactor. Beside the risk of forming agglomerates, the build-up of electrostatic charges in the multizone circulating reactor can influence the fluid-dynamics in the reactor and induce, for example, fluctuating densities in the riser or an oscillation of the polymer level in the downer.

Thus, it was the object of the present invention to overcome the disadvantages of the prior art and to find a polymerization process which not only prevents the formation of polymer agglomerates in the polymerization reactors but also avoids fluctuations in the fluid-dynamics of the multizone circulating reactor.

We found that this object is achieved by a process for preparing a polyolefin polymer from one or more olefins by gas-phase polymerization at temperatures of from 40°to 150°C and pressures of from 0.1 to 20 MPa in the presence of a polymerization catalyst in a polymerization reactor cascade comprising a fluidized-bed reactor and a multizone circulating reactor, in which multizone circulating reactor the growing polymer particles flow upward through a first polymerization zone under fast fluidization or transport conditions, leave said first polymerization zone and enter a second polymerization zone through which they flow downward under the action of gravity, leave said downcomer and are reintroduced into the riser, thus establishing a circulation of polymer,
wherein the polymerization in the multizone circulating reactor is carried out in the presence of a combination of
- a hydroxyester having at least one free hydroxyl group, obtained from reacting a polyalcohol with a carboxylic acid having from 4 to 22 carbon atoms and
- an ethoxylated alkylamine or ethoxylated alkylamide comprising an alkyl group of from 2 to 20 carbon atoms
   where the total amount of hydroxyester fed to the multizone circulating reactor and to any upstream polymerization reactor is from 3 to 300 ppm with respect to the total amount of olefins fed to the multizone circulating reactor and to any upstream polymerization reactor and the amount of ethoxylated alkylamine or ethoxylated alkylamide fed to the multizone circulating reactor and to any upstream polymerization is from 5 to 1000 ppm with respect to the total amount of olefins fed to the multizone circulating reactor and to any upstream polymerization reactor.

The features and advantages of the present invention can be better understood via the following description and the accompanying drawing which shows schematically a preferred set-up of a polymerization reactor cascade comprising a fluidized-bed reactor and a multizone circulating reactor for carrying out the process of the present invention.

Suitable olefins for preparing the polyolefin polymers of the present invention are especially 1-olefins, i.e. hydrocarbons having terminal double bonds, without being restricted thereto. Suitable olefins monomers can however also be functionalized olefinically unsaturated compounds such as ester or amide derivatives of acrylic or methacrylic acid, for example acrylates, methacrylates, or acrylonitrile. Preference is given to nonpolar olefinic compounds, including aryl-substituted 1-olefins. Particularly preferred 1-olefins are linear or branched C₂-C₁₂-1-alkenes, in particular linear C₂-C₁₀-1-alkenes such as ethylene, propylene, 1-butene, 1-pentene, 1-hexene, 1-heptene, 1-octene, 1-decene or branched C₂-C₁₀-1-alkenes such as 4-methyl-1-pentene, conjugated and nonconjugated dienes such as 1,3-butadiene, 1,4-hexadiene or 1,7-octadiene or vinylaromatic compounds such as styrene or substituted styrene. It is also possible to polymerize mixtures of various 1-olefins. Suitable olefins also include ones in which the double bond is part of a cyclic structure which can have one or more ring systems. Examples are cyclopentene, norbornene, tetracyclododecene or methylnorbornene or dienes such as 5-ethylidene-2-norbornene, norbornadiene or ethylnorbornadiene. It is also possible to polymerize mixtures of two or more olefins.

The process can be used in particular for the homopolymerization or copolymerization of ethylene or propylene and is especially preferred for the homopolymerization or copolymerization of ethylene. Preferred comonomers in propylene polymerization are up to 40 wt.-% of ethylene and/or 1-butene. As comonomers in ethylene polymerization, preference is given to using up to 20 wt.-%, more preferably from 0.01 wt.-% to 15 wt.-% and especially from 0.05 wt.-% to 10 wt.-% of C₃-C₈-1-alkenes, in particular 1-butene, 1-pentene, 1-hexene and/or 1-octene. Particular preference is given to a process in which ethylene is copolymerized with from 0.1 wt.-% to 8 wt.-% of 1-hexene and/or 1-butene.

The polyolefin polymers of the present invention are obtained by gas-phase polymerization, i.e. by a process in which the solid polymers are obtained from a gas-phase of the monomer or the monomers. The polymerization is carried out at pressures of from 0.1 to 20 MPa, preferably from 0.5 to 10 MPa and in particular from 1.0 to 5 MPa. The polymerization temperature is from 40 to 150°C and preferably from 65 to 125°C.

The polymerization of olefins of the present invention can be carried out using all customary olefin polymerization catalysts. That means the polymerization can be carried out using Phillips catalysts based on chromium oxide, using titanium-based Ziegler- or Ziegler-Natta-catalysts, or using single-site catalysts. For the purposes of the present invention, single-site catalysts are catalysts based on chemically uniform transition metal coordination compounds. Particularly suitable single-site catalysts are those comprising bulky sigma- or pi-bonded organic ligands, e.g. catalysts based on mono-Cp complexes, catalysts based on bis-Cp complexes, which are commonly designated as metallocene catalysts, or catalysts based on late transition metal complexes, in particular iron-bisimine complexes. Furthermore, it is also possible to use mixtures of two or more of these catalysts for the polymerization of olefins. Such mixed catalysts are often designated as hybrid catalysts. The preparation and use of these catalysts for olefin polymerization are generally known.

Preferred catalysts are of the Ziegler type preferably comprising a compound of titanium or vanadium, a compound of magnesium and optionally an electron donor compound and/or a particulate inorganic oxide as support.

As titanium compounds, use is generally made of the halides or alkoxides of trivalent or tetravalent titanium, with titanium alkoxy halogen compounds or mixtures of various titanium compounds also being possible. Examples of suitable titanium compounds are TiBr₃, TiBr₄, TiCl₃, TiCl₄, Ti(OCH₃)Cl₃, Ti(OC₂H₅)Cl₃, Ti(O-i-C₃H₇)Cl₃, Ti(O-n-C₄H₉)Cₗ₃, Ti(OC₂H₅)Br₃, Ti(O-n-C₄H₉)Br₃, Ti(OCH₃)₂Cl₂, Ti(OC₂H₅)₂Cₗ₂, Ti(O-n-C₄H₉)₂Cₗ₂, Ti(OC₂H₅)₂Br₂, Ti(OCH₃)₃Cl, Ti(OC₂H₅)₃Cl, Ti(O-n-C₄H₉)₃Cl, Ti(OC₂H₅)₃Br, Ti(OCH₃)₄, Ti(OC₂H₅)₄ or Ti(O-n-C₄H₉)₄. Preference is given to using titanium compounds which comprise chlorine as the halogen. Preference is likewise given to titanium halides which comprise only halogen in addition to titanium and among these especially titanium chlorides and in particular titanium tetrachloride. Among the vanadium compounds, particular mention may be made of the vanadium halides, the vanadium oxyhalides, the vanadium alkoxides and the vanadium acetylacetonates. Preference is given to vanadium compounds in the oxidation states 3 to 5.

In the production of the solid component, at least one compound of magnesium is preferably additionally used. Suitable compounds of this type are halogen-comprising magnesium compounds such as magnesium halides and in particular the chlorides or bromides and magnesium compounds from which the magnesium halides can be obtained in a customary way, e.g. by reaction with halogenating agents. For the present purposes, halogens are chlorine, bromine, iodine or fluorine or mixtures of two or more halogens, with preference being given to chlorine or bromine and in particular chlorine.

Possible halogen-comprising magnesium compounds are in particular magnesium chlorides or magnesium bromides. Magnesium compounds from which the halides can be obtained are, for example, magnesium alkyls, magnesium aryls, magnesium alkoxy compounds or magnesium aryloxy compounds or Grignard compounds. Suitable halogenating agents are, for example, halogens, hydrogen halides, SiCl₄ or CCl₄ and preferably chlorine or hydrogen chloride.

Examples of suitable, halogen-free compounds of magnesium are diethylmagnesium, di-n-propylmagnesium, diisopropylmagnesium, di-n-butylmagnesium, di-sec-butylmagnesium, di-tert-butylmagnesium, diamylmagnesium, n-butylethylmagnesium, n-butyl-sec-butylmagnesium, n-butyloctylmagnesium, diphenylmagnesium, diethoxymagnesium, di-n-propyloxymagnesium, diisopropyloxymagnesium, di-n-butyloxymagnesium, di-sec-butyloxymagnesium, di-tert-butyloxymagnesium, diamyloxymagnesium, n-butyloxyethoxymagnesium, n-butyloxy-sec-butyloxymagnesium, n-butyloxyoctyloxymagnesium and diphenoxymagnesium. Among these, preference is given to using n-butylethylmagnesium or n-butyloctylmagnesium.

Examples of Grignard compounds are methylmagnesium chloride, ethylmagnesium chloride, ethylmagnesium bromide, ethylmagnesium iodide, n-propylmagnesium chloride, n-propylmagnesium bromide, n-butylmagnesium chloride, n-butylmagnesium bromide, sec-butylmagnesium chloride, sec-butylmagnesium bromide, tert-butylmagnesium chloride, tert-butylmagnesium bromide, hexylmagnesium chloride, octylmagnesium chloride, amylmagnesium chloride, isoamylmagnesium chloride, phenylmagnesium chloride and phenylmagnesium bromide.

As magnesium compounds for producing the particulate solids, preference is given to using, apart from magnesium dichloride or magnesium dibromide, the di(C₁-C₁₀-alkyl)magnesium compounds. Preferably, the Ziegler-Natta catalyst comprises a transition metal selected from titanium, zirconium, vanadium, chromium.

Suitable electron donor compounds for preparing Ziegler type catalysts are for example alcohols, glycols, esters, ketones, amines, amides, nitriles, alkoxysilanes and aliphatic ethers. These electron donor compounds can be used alone or in mixtures with other electron donor compounds.

Preferred alcohols are those of formula R¹OH in which the R¹ group is a C₁-C₂₀ hydrocarbon group. Preferably, R¹ is a C₁-C₁₀ alkyl group. Specific examples are methanol, ethanol, isopropanol and n-butanol. Preferred glycols are those having a total number of carbon atoms lower than 50. Among them particularly preferred are the 1,2 or 1,3 glycols having a total number of carbon atoms lower than 25. Specific examples are ethylenglycol, 1,2-propylenglycol and 1,3-propylenglycol. Preferred esters are the alkyl esters of C₁-C₂₀ aliphatic carboxylic acids and in particular C₁-C₈ alkyl esters of aliphatic mono carboxylic acids such as ethylacetate, methylformiate, ethylformiate, methylacetate, propylacetate, i-propylacetate, n-butylacetate, i-butylacetate. Preferred amines are those of formula NR²₃ in which the R² groups are, independently, hydrogen or a C₁-C₂₀ hydrocarbon group with the proviso that they are not simultaneously hydrogen. Preferably, R² is a C₁-C₁₀ alkyl group. Specific examples are diethylamine, diisopropylamine and triethylamine. Preferred amides are those of formula R³CONR⁴₂ in which R³ and R⁴ are, independently, hydrogen or a C₁-C₂₀ hydrocarbon group. Specific examples are formamide and acetamide. Preferred nitriles are those of formula R¹CN where R¹ has the same meaning given above. A specific example is acetonitrile. Preferred alkoxysilanes are those of formula R⁵ₐR⁶_{b}Si(OR⁷)_{c}, where a and b are integer from 0 to 2, c is an integer from 1 to 4 and the sum (a+b+c) is 4; R⁵, R⁶, and R⁷, are alkyl, cycloalkyl or aryl radicals with 1-18 carbon atoms optionally containing heteroatoms. Particularly preferred are the silicon compounds in which a is 0 or 1, c is 2 or 3, R⁶ is an alkyl or cycloalkyl group, optionally containing heteroatoms, and R⁷ is methyl. Examples of such preferred silicon compounds are methyltrimethoxysilane, dimethyldimethoxysilane, trimethylmethoxysilane and t-butyltrimethoxysilane.

Preferred electron donor compounds are selected from the group consisting of amides, esters, and alkoxysilanes.

Catalysts of the Ziegler type are usually polymerized in the presence of a cocatalyst. Preferred cocatalysts are organometallic compounds of metals of groups 1, 2, 12, 13 or 14 of the Periodic Table of Elements, in particular organometallic compounds of metals of group 13 and especially organoaluminum compounds. Preferred cocatalysts are for example organometallic alkyls, organometallic alkoxides, or organometallic halides.

Preferred organometallic compounds comprise lithium alkyls, magnesium or zinc alkyls, magnesium alkyl halides, aluminum alkyls, silicon alkyls, silicon alkoxides and silicon alkyl halides. More preferably, the organometallic compounds comprise aluminum alkyls and magnesium alkyls. Still more preferably, the organometallic compounds comprise aluminum alkyls, preferably trialkylaluminum compounds. Preferably, the aluminum alkyls comprise, for example, trimethylaluminum, triethylaluminum, tri-isobutylaluminum, tri-n-hexylaluminum and the like.

The polyolefin polymers grow in the form of polymer particles having a more or less regular morphology and size, depending on the catalyst morphology and size, and on polymerization conditions. Depending on the catalyst used, the polyolefin particles usually have a mean diameter of from a few hundred to a few thousand micrometers. In the case of chromium catalysts, the mean particle diameter is usually from about 400 to about 1600 µm, and in the case of Ziegler-Natta catalysts the mean particle diameter is usually from about 600 to about 3000 µm.

The process of the present invention is carried out in a reactor cascade comprising a fluidized-bed reactor and a multizone circulating reactor. Preferably the fluidized-bed reactor is arranged upstream of the multizone circulating reactor.

Fluidized-bed polymerization reactors are reactors in which the polymerization takes place in a bed of polymer particles which is maintained in a fluidized state by feeding in reaction gas at the lower end of a reactor, usually below a gas distribution grid having the function of dispensing the gas flow, and taking off the gas again at its upper end. The reaction gas is then returned to the lower end to the reactor via a recycle line equipped with a compressor and a heat exchanger. The circulated reaction gas is usually a mixture of the olefins to be polymerized, inert gases such as nitrogen and/or lower alkanes such as ethane, propane, butane, pentane or hexane and optionally a molecular weight regulator such as hydrogen. The use of nitrogen or propane as inert gas, if appropriate in combination with further lower alkanes, is preferred. The velocity of the reaction gas has to be sufficiently high firstly to fluidize the mixed bed of finely divided polymer present in the tube serving as polymerization zone and secondly to remove the heat of polymerization effectively. The polymerization can also be carried out in a condensing or super-condensing mode, in which part of the circulating reaction gas is cooled to below the dew point and returned to the reactor separately as liquid and gas-phase or together as two-phase mixture in order to make additional use of the enthalpy of vaporization for cooling the reaction gas.

The reactor cascade of the present invention further comprises a multizone circulating reactor, in which two polymerization zones are linked to one another and the polymer is passed alternately a plurality of times through these two zones. Preferred multizone circulating reactors are, for example, described in WO 97/04015 and WO 00/02929 and have two interconnected polymerization zones, a riser, in which the growing polymer particles flow upward under fast fluidization or transport conditions and a downcomer, in which the growing polymer particles flow in a densified form under the action of gravity. The polymer particles leaving the riser enter the downcomer riser and the polymer particles leaving the downcomer are reintroduced into the riser, thus establishing a circulation of polymer between the two polymerization zones.

It is further not only possible to operate different polymerization reactors with different polymerization conditions but also to operate the two polymerization zones of one multizone circulating reactor differently by establishing different polymerization conditions in its riser and its downcomer. For this purpose, the gas mixture leaving the riser and entraining the polymer particles can be partially or totally prevented from entering the downcomer. This can for example be achieved by feeding a barrier fluid in form of a gas and/or a liquid mixture into the downcomer, preferably in the upper part of the downcomer. The barrier fluid should have a suitable composition, different from that of the gas mixture present in the riser. The amount of added barrier fluid can be adjusted in a way that an upward flow of gas counter-current to the flow of the polymer particles is generated, particularly at the top thereof, acting as a barrier to the gas mixture entrained among the particles coming from the riser. In this manner it is possible to obtain two different gas composition zones in one multizone circulating reactor. Furthermore it is also possible to introduce make-up monomers, comonomers, molecular weight regulator such as hydrogen and/or inert fluids at any point of the downcomer, preferably below the barrier feeding point. Thus, it is also easily possible to create varying monomer, comonomer and hydrogen concentrations along the downcomer resulting in a further differentiation of the polymerization conditions.

The reactor cascade of the present invention may also further comprise additional polymerization reactors. These additional reactors can be any kind of low-pressure polymerization reactors such as gas-phase reactors or suspension reactors. If the multistage polymerization of olefins includes polymerization in suspension, the suspension polymerization is preferably carried out upstream of the gas-phase polymerization. Suitable reactors for carrying out such a suspension polymerization are for example loop reactors or stirred tank reactors. Suitable suspension media are inter alia inert hydrocarbons such as isobutane or mixtures of hydrocarbons or else the monomers themselves. Such additional polymerization stages, which are carried out in suspension, may also include a pre-polymerization stage. If the multistage polymerization of olefins comprises additional polymerization stages carried out in gas-phase, the additional gas-phase polymerization reactors can be any type of gas-phase reactors like horizontally or vertically stirred gas-phase reactors, fluidized-bed reactors or multizone circulating reactors. Such additional gas-phase polymerization reactors may be arranged at any point of the reactor cascade of the present invention.

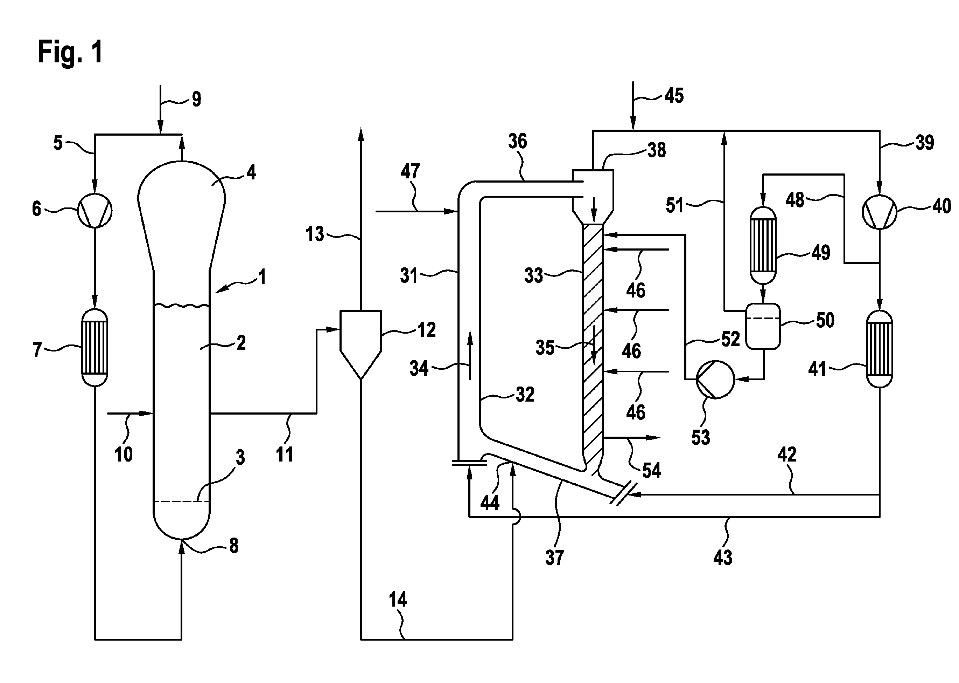

Figure 1 shows schematically a set-up of a polymerization reactor cascade comprising a fluidized-bed reactor and a multizone circulating reactor for carrying out the process of the present invention.

The first gas-phase reactor, fluidized-bed reactor (1), comprises a fluidized bed (2) of polyolefin particles, a gas distribution grid (3) and a velocity reduction zone (4). The velocity reduction zone (4) is generally of increased diameter compared to the diameter of the fluidized-bed portion of the reactor. The polyolefin bed is kept in a fluidization state by an upwardly flow of gas fed through the gas distribution grid (3) placed at the bottom portion of the reactor (1). The gaseous stream of the reaction gas leaving the top of the velocity reduction zone (4) via recycle line (5) is compressed by compressor (6), transferred to a heat exchanger (7), in which it is cooled, and then recycled to the bottom of the fluidized-bed reactor (1) at a point below the gas distribution grid (3) at position (8). The recycle gas can, if appropriate, be cooled to below the dew point of one or more of the recycle gas components in the heat exchanger so as to operate the reactor with condensed material, i.e. in the condensing mode. The recycle gas can comprise, besides unreacted monomers, also inert condensable gases, such as alkanes, as well as inert non-condensable gases, such as nitrogen. Make-up monomers, molecular weight regulators, and optional inert gases or process additives can be fed into the reactor (1) at various positions, for example via line (9) upstream of the compressor (6); this non-limiting the scope of the invention. Generally, the catalyst is fed into the reactor (1) via a line (10) that is preferably placed in the lower part of the fluidized bed (2).

The polyolefin particles obtained in fluidized-bed reactor (1) are discontinuously discharged via line (11) and fed to a solid/gas separator (12) in order to avoid that the gaseous mixture coming from fluidized-bed reactor (1) enters the second gas-phase reactor. The gas leaving solid/gas separator (12) exits the reactor via line (13) as off-gas while the separated polyolefin particles are fed via line (14) to the second gas-phase reactor.

The second gas-phase reactor is a multizone circulating gas-phase reactor (31) with two reaction zones, riser (32) and downcomer (33), which are repeatedly passed by the polyolefin particles. Within riser (32), the polyolefin particles flow upward under fast fluidization conditions along the direction of arrow (34). Within downcomer (33) the polyolefin particles flow downward under the action of gravity along the direction of arrow (35). The riser (32) and the downcomer (33) are appropriately interconnected by the interconnection bends (36) and (37).

After flowing through the riser (32), the polyolefin particles and the gaseous mixture leave the riser (32) and are conveyed to a solid/gas separation zone (38). This solid/gas separation can be effected by using conventional separation means such as, for example, a centrifugal separator like a cyclone. From the separation zone (38) the polyolefin particles enter the downcomer (33).

The gaseous mixture leaving the separation zone (38) is recycled to the riser (32) by means of a recycle line (39), equipped with a compressor (40) and a heat exchanger (41).Downstream of the heat exchanger (41) the recycle line (39) splits and the gaseous mixture is divided into two separated streams: line (42) conveys a part of the recycle gas into the interconnection bend (37), while the line (43) conveys another part the recycle gas to the bottom of the riser (32), so as to establish fast fluidization conditions therein.

The polyolefin particles coming from the first gas-phase reactor via line (14) enter the multizone circulating gas-phase reactor (31) at the interconnection bend (37) in position (44).

Make-up monomers, make-up comonomers, and optionally inert gases or process additives can be fed to the multizone circulating reactor (31) via one, two or more lines (45) or (46), suitably placed at any point of the gas recycle line (39) or the downcomer (33). A preferred route for feeding process additives such as antistatic agents is further feeding them via line (47).

A part of the gaseous mixture leaving the separation zone (38) exits recycle line (39) after the compressor (40) and is sent through line (48) to heat exchanger (49) where it is cooled to a temperature at which the monomers and the optional inert gas are partially condensed. A separating vessel (50) is placed downstream the heat exchanger (49). The separated gaseous mixture is recirculated through line (51) to recycle line (39) and the separated liquid is fed to the downcomer (33) through line (52) by means of pump (53).

The polyolefin particles obtained in the multizone circulating reactor (31) are continuously discharged from the bottom part of downcomer (33) via discharge line (54).

According to the present invention, the polymerization in the multizone circulating reactor is carried out in the presence of a combination of a hydroxyester and an ethoxylated alkylamine or ethoxylated alkylamide.

The hydroxyesters have at least one, preferably at least two free hydroxyl groups and are obtained from reacting a polyalcohol with a carboxylic acid having from 4 to 22 carbon atoms, preferably from 8 to 22 carbon atoms. The hydrocarbyl group of the carboxylic acid can be branched or linear and is preferably linear and may include one or more carbon-carbon double bonds. Examples of suitable carboxylic acids are saturated or unsaturated fatty acids. The polyalcohol has at least 3 carbon atoms, preferably from 3 to 10 carbon atoms and more preferably from 3 to 6 carbon atoms. Most preferred polyalcohols are glycerol or sorbitol. The number of ester groups of the hydroxyl esters of the present invention depends on the utilized polyalcohol and is preferably from one to three, more preferably only one, i.e. the ester is monoester. The esterification of the polyalcohol can further also be carried out in the presence of ethylene oxide.

Examples of suitable hydroxyesters are glycerol monolaurate, glycerol monomyristate, glycerol monopalmitate, glycerol monostearate, glycerol monooleate, or glycerol monoricinoleate. Glycerol monooleate and glycerol monostearate, such as Atmer 129 of Croda, are most preferred hydroxyesters.

The ethoxylated alkylamines or ethoxylated alkylamides of the present invention comprise an alkyl group of from 2 to 20 carbon atoms and preferably from 6 to 18 carbon atoms. In a preferred embodiment of the present invention, ethoxylated alkylamines are utilized. Preferred representatives of ethoxylated alkylamines are N-alkyl diethanolamines of the general formula CH₃(CH)ₙCH₂-N(CH₂CH₂OH)₂, in which n is from 2 to 20 and preferably from 6 to 18. A representative of such N-alkyl diethanolamines is Atmer 163 of Croda.

The total amount of hydroxyester fed to the multizone circulating reactor and to any upstream polymerization reactor is from 3 to 300 ppm, preferably from 10 to 70 ppm and more preferably from 20 to 50 ppm, with respect to the total amount of olefins fed to the multizone circulating reactor and to any upstream polymerization reactor and the amount of ethoxylated alkylamine or ethoxylated alkylamide fed to the multizone circulating reactor and to any upstream polymerization is from 5 to 1000 ppm and preferably from 100 to 300 ppm with respect to the total amount of olefins fed to the multizone circulating reactor and to any upstream polymerization reactor, i.e. the amount of fed hydroxyester and ethoxylated alkylamine or ethoxylated alkylamide refers to the sum of all monomers and comonomers fed to the respective polymerization reactors.

The hydroxyester and the ethoxylated alkylamine or ethoxylated alkylamide can be fed directly to the multizone circulating reactor or they can be fed to any polymerization reactor of the polymerization reactor cascade arranged upstream of the multizone circulating reactor and then be transferred to the multizone circulating reactor. If according to a preferred embodiment of the present invention the fluidized-bed reactor is arranged upstream of the multizone circulating reactor it is preferred to feed at least one of the hydroxyester and the ethoxylated alkylamine or ethoxylated alkylamide to the fluidized-bed reactor and the other compound directly to the multizone circulating reactor. In such a set-up, it is especially preferred that the ethoxylated alkylamine or ethoxylated alkylamide is fed to the fluidized-bed reactor and the hydroxyester is fed directly to the multizone circulating reactor. It is however also preferred to feed both the hydroxyester and the ethoxylated alkylamine or ethoxylated alkylamide to the fluidized-bed reactor and have then both compounds transferred to the multizone circulating reactor together with the polyolefin particles formed in the fluidized-bed reactor.

The process of the present invention allows the preparation of all types of common polyolefin polymers. Preferably the prepared polyolefin polymers are broad molecular weight polyolefin polymers and the broad molecular weight polyolefin polymers are preferably multimodal polyolefin polymers whereby the term multimodal refers to the modality of the molecular weight distribution. As frequently used in the art, and also used herein, multimodal shall include bimodal. Such polymers can be obtained from polymerizing olefins in a cascade of two or more polymerization reactors under different reaction conditions. Thus, the "modality" indicates how many different polymerization conditions were utilized to prepare the polyolefin, independently whether this modality of the molecular weight distribution can be recognized as separated maxima in a gel permeation chromatography (GPC) curve or not. In addition to the molecular weight distribution, the polyolefin polymer can also have a comonomer distribution, wherein preferably the average comonomer content of polymer chains with a higher molecular weight is higher than the average comonomer content of polymer chains with a lower molecular weight. It is however also possible to employ identical or very similar reaction conditions in all polymerization reactors of the reaction cascade and so prepare narrow molecular weight or monomodal polyolefin polymers.

Preferably the fluidized-bed reactor and the multizone circulating reactor of the polymerization reactor cascade of the present invention are operated with different polymerization conditions and especially with different concentrations of molecular weight regulator such as hydrogen. Accordingly, a lower molecular weight polyolefin polymer component is obtained in the polymerization with the lower hydrogen concentration reactor and a higher molecular weight polyolefin polymer component is obtained in the polymerization with the lower hydrogen concentration reactor. In the preferred embodiment of the present invention, in which the fluidized-bed reactor is arranged upstream of the multizone circulating reactor, it is preferred that the fluidized-bed reactor is operated with a higher concentration of hydrogen producing a lower molecular weight polyolefin polymer component and the multizone circulating reactor is operated with a lower concentration of hydrogen producing a higher molecular weight polyolefin polymer component.

Preferred polyolefin polymers prepared in the process of the present invention are multimodal molecular weight polyethylenes have a MFR_{21.6} at a temperature of 190°C under a load of 21.6 kg is in the range of from 1.5 g/10 min to 35 g/10 min and more preferably in the range of from 2 g/10 min to 10 g/10 min. Preferably the density is in the range of from 0.935 g/cm³ to 0,966 g/cm³ and more preferably in the range of from 0.945 g/cm³ to 0,958 g/cm³.

The process of the present invention provides a possibility for preparing a polyolefin polymer by gas-phase polymerization in a polymerization reactor cascade comprising a fluidized-bed reactor and a multizone circulating reactor, in which the formation of polymer agglomerates in the polymerization reactors and fluctuations in the fluid-dynamics of the multizone circulating reactor are prevented or at least significantly reduced.

The process of the present results in a substantial reduction of the level of electrostatic charges observed in the multizone circulating reactor. Because of the reduced electrostatics, the tendency of the polyolefin polymer particles to stick to the reactor walls is reduced. This does not only reduces the risk of forming chunks or wall sheeting, which mostly leads to an unavoidable shut-down of the polymerization reactor because of plugging the discharge line, but also improves the fluid-dynamics of the multizone circulating reactor and avoids their fluctuations.

If, for example, polymer particles have a tendency to adhere to the walls of the riser of the multizone circulating reactor and coverage of the riser wall is continuously build-up, the polymer particle layer or a part of the layer can drop at a certain time. As a result, the amount of transportable polymer particles in the riser increases immediately, more polymer is transported to the downcomer and the polymer particle level within the downcomer rises very fast. By the increase of the number of polymer particles within the riser however not only the density of the reactor content in the riser changes temporarily but also the fluid-dynamics of the reaction mixture fluctuate. Moreover, the variation of the polymer particle level within the downcomer also influences the fluid-dynamics within the whole multizone circulating reactor.

The level of electrostatic charges observed in the multizone circulating reactor is especially sensitive to the molecular weight of the polyolefin polymer particles transferred into it. The lower their melt index is the higher are the electrostatic charges in the second reactor. Especially if polyethylene particles having a MFR_{2.16} at a temperature of 190°C under a load of 2.16 kg of less than 60 g/10 min are introduced into the multizone circulating reactor, the process of the present invention provides significant advantages.

### Examples

The density was determined according to DIN EN ISO 1183-1:2004, Method A (Immersion) with compression molded plaques of 2 mm thickness. The compression molded plaques were prepared with a defined thermal history: Pressed at 180°C, 20MPa for 8 min with subsequent crystallization in boiling water for 30 min.

The melt flow rate MFR_{2.16} was determined according to DIN EN ISO 1133:2005, condition D at a temperature of 190°C under a load of 2.16 kg.

The melt flow rate MFR₅ was determined according to DIN EN ISO 1133:2005, condition T at a temperature of 190°C under a load of 5 kg.

The melt flow rate MFR_{21.6} was determined according to DIN EN ISO 1133:2005, condition G at a temperature of 190°C under a load of 21.6 kg.

The Flow Rate Ratio FRR is the ratio of MFR_{21.6} / MFR₅.

The electrostatic charges present in the second polymerization reactor of the polymerization reactor cascade were measured by a sensor (Correstat 3410; Progression, Inc., Haverhill, MA, USA), which monitors charge activity and polarity within the reactor. It has a measurement range from +/- 0.1 to 10 nA full scale. For the evaluation of the electrostatic charges inside the reactor, the difference between measured negative and positive charges was chosen. The maximum difference is 20 nA and is defined as 100 % scale whereas no variation in the electrostatic charge is referred to as 0 % scale.

The operability of the second polymerization reactor was classified according to four categories. An indication of the operability for specific polymerization conditions is, for example, given by density measurements in the multizone circulating reactor. If polymer particles continuously adhere to the walls of the riser, the coverage of the wall increases until the whole layer or a part of the layer drops at a certain time. As a result, the density of the rector content in the riser increases, a higher polymer mass stream is transported to the downcomer and the polymer particle level within the downcomer increases very fast. The more pronounced these effects are and the more often they occur, the worse is the operability. Such sticking and dropping phenomena can also be observed in the transportation lines of the multizone circulating reactor or at other positions. If a layer of sticking polymer particles is e.g. build-up upon a probe for density measurement, the coverage and its thickness influence the out-put of the density measurement device. Thus, by monitoring the results of the density measurements at different positions of the polymerization reactor, for example at the bottom and at the top of the riser and at the entrance of the downcomer and further observing the polymer particle level within the downcomer and observing the fluctuations of these measurements it is possible to assess the operability of the second polymerization reactor.

Based on experience and continuous observation of the reactor conditions, the operability was classified according to the four following categories:
- Very bad operability: Very unstable reactor behavior, which usually leads to an unavoidable shut-down within a period of 2 hours.
- Bad operability: Unstable reactor behavior, which usually leads to an unavoidable shut-down within a period of 12 hours.
- Moderate operability: Still instable reactor behavior but usually without the need of a shut-down.
- Good operability: Stable reactor behavior with only minor fluctuations.

### Examples 1 and 2 and Comparative Examples A to F

A polyethylene was prepared in a cascade of a fluidized-bed reactor and a multizone circulating reactor having two interconnected reaction zones as shown in Figure 1.

For carrying out the polymerization, 7 g/h of a Ziegler-Natta catalyst, which was prepared according to example 13 of WO 2004/106388 A2 with a molar feed ratio of electron donor/Ti of 8, were fed using 5 kg/h of liquid propane to a first stirred precontacting vessel, into which also triethylaluminum (TEA) and tetrahydrofuran (THF) were dosed. The weight ratio of triethylaluminum to the Ziegler catalyst was 6:1. The weight ratio of TEA to THF was 44. The first precontacting vessel was kept at 50°C with an average residence time of 10 minutes. The catalyst suspension of the first precontacting vessel was continuously transferred to a second stirred precontacting vessel, which was operated with an average residence time of 60 minutes and kept also at 50°C. The catalyst suspension was then transferred continuously to fluidized-bed reactor (FBR) (1) via line (10).

In fluidized-bed reactor (1), ethylene was polymerized in the presence of propane as inert diluent using hydrogen as molecular weight regulator. 40 kg/h of ethylene and 95 g/h of hydrogen were fed to fluidized-bed reactor (1) via line (9). No comonomer was added. The polymerization was carried out at a temperature of 80°C and a pressure of 2.9 MPa. The selected feed rates resulted in an ethylene concentration in the reactor of 10 vol.-% and a molar ratio of hydrogen/ethylene in the reactor of 1.5. Furthermore, 80 ppm of Atmer 163 were fed to the first reactor via line (9) as antistatic agent. The amount of added antistatic agents was calculated as weight ratio of the weight of added antistatic agent to the weight of ethylene fed to the first reactor.

The polyethylene obtained in fluidized-bed reactor (1) had a MFR_{2.16} of 20 g/10 min and a density of 0.966 g/cm³.

The polyethylene obtained in fluidized-bed reactor (1) was continuously transferred to multizone circulating reactor (MZCR) (31) which was operated at a pressure of 2.5 MPa and a temperature of 78°C measured at the gas exit from reactor (31). 14 kg/h of ethylene and 0.95 kg/h of 1-hexene were introduced into downcomer (33) via lines (46) and 5 kg/h of propane, 28.5 kg/h of ethylene and 7.6 g/h of hydrogen were fed into the recycling line (39) via line (45). The selected polymerization conditions resulted in a molar ratio of hydrogen/ethylene in line (43) of 0.2. In order to broaden the molecular weight distribution of the final ethylene polymer, the multizone circulating reactor (31) was operated by establishing different conditions of monomers and hydrogen concentration within riser (32) and the downcomer (33). This was achieved by feeding 330 kg/h of a liquid stream of partially condensed recycle gas via line (52) into the upper part of the downcomer (33). Heat exchanger (49) was operated at 52°C and 2.5 MPa.

The split, i.e. the portion produced in the first reactor of the total amount of the final polyethylene polymer produced in both the first and the second polymerization reactor, was 49 % by weight. The obtained polyethylene polymer had a relatively broad molecular weight distribution with a FRR of 20. The obtained density was 0.950 g/cm³.

The following antistatic agents were added via line (47) to multizone circulating reactor (31):
- Atmer 163, a synthetic ethoxylated amine of Croda GmbH, Nettetal, Germany
- Statsafe 3000, a static dissipator of Innospec Limited, Cheshire, United Kingdom
- Grindsted PGE O 80/D, a polyglycerol ester of Danisco A/S, Braband, Denmark
- Kerostat 8190, an antistatically acting composition comprising a polysulfone copolymer, a polymeric compound comprising basic nitrogen atoms and an oil-soluble sulfonic acid of BASF SE, Ludwigshafen, Germany
- Cithrol GMS 40-PW-(GD), a glycerol monostearate of Croda GmbH, Nettetal, Germany

The kind of the added antistatic agents and their amounts are indicated in Table 1. The amounts were calculated as weight ratio of the weight of added antistatic agent to the sum of the weight of ethylene fed to the first reactor and the weight of the ethylene fed to the second reactor.

The results of the measured electrostatic charges and the observed operabilities are also shown in Table 1.

### Comparative Example G

The polymerizations of Examples 1 and 2 and Comparative Examples A to F were repeated; however a second fluidized-bed reactor was utilized as second reactor of the polymerization reactor cascade instead of the multizone circulating reactor. The second fluidized-bed reactor (FBR) was operated at a temperature of 78°C and a pressure of 2.5 MPa. 42.5 kg/h of ethylene, 0.95 kg/h of 1-hexene, 5 kg/h of propane and 7.1 g/h of hydrogen were fed into the recycling system. 90 ppm of Atmer 163 were dosed as antistatic agent. As in Examples 1 and 2 and Comparative Examples A to F, the split was adjusted to 49 % by weight and the obtained polyethylene had a FRR of 20 and a density of 0.950 g/cm³.

The results of the measured electrostatic charges and the observed operability are shown in Table 1.

**Table 1**

| | | Example 1 | Example 2 | Comp. Example A | Comp. Example B | Comp. Example C | Comp. Example D | Comp. Example E | Comp. Example F | Comp. Example G |
|---|---|---|---|---|---|---|---|---|---|---|
| (A) First reactor (FBR) | | | | | | | | | | |
| | Atmer 163 [ppm] | 80 | 80 | 80 | 80 | 80 | 80 | 80 | 80 | 80 |

| (B1) Second reactor (MZCR) | | | | | | | | | | |
|---|---|---|---|---|---|---|---|---|---|---|
| | Atmer 163 [ppm] | 90 | 90 | 90 | 200 | 90 | 90 | 40 | 90 | / |
| | Costelan AS 100 [ppm] | / | / | / | / | 50 | / | / | / | / |
| | Grindsted PGE O 80/D [ppm] | / | / | / | / | / | 50 | 100 | / | / |
| | Kerostat 8190 [ppm] | / | / | / | / | / | / | / | 50 | / |
| | GMS 40 [ppm] | 20 | 50 | / | / | / | / | / | / | / |

| (B2) Second reactor (FBR) | | | | | | | | | | |
|---|---|---|---|---|---|---|---|---|---|---|
| | Atmer [ppm] | / | / | / | / | / | / | / | / | 90 |

| Reactor behavior of second reactor | | | | | | | | | | |
|---|---|---|---|---|---|---|---|---|---|---|
| | Electrostatics [%] | 35 | 20 | 95 | 90 | 95 | 88 | 84 | 94 | 98 |
| | Operability | good | good | very bad | very bad | very bad | bad | bad | very bad | good |
| | Chunks or wall sheeting | no | no | yes | yes | yes | yes | yes | no | no |

The results of Examples 1 and 2 demonstrate that is it possible to operate a cascade of polymerization reactors comprising a fluidized-bed reactor and a multizone circulating reactor with good operability and without formation of polymer agglomerates in the polymerization reactors. The comparison with Comparative Examples A and B however reveals that using only an ethoxylated amine as antistatic agent in both the fluidized-bed reactor and the multizone circulating reactor is not sufficient to get an acceptable operability of the multizone circulating reactor. Furthermore, Comparative Examples C to F show that feeding several antistatic agents of different chemical nature in combination with the ethoxylated amine does not improve the electrostatics and the operability of the multizone circulating significantly . Moreover, Comparative Example G demonstrates that for a cascade of two fluidized-bed reactors it is sufficient to add only an ethoxylated amine as antistatic agent to both reactors for achieving a good operability although the electrostatics are poor and large differences between measured negative and positive charges can be observed.

## Claims

1. A process for preparing a polyolefin polymer from one or more olefins by gas-phase polymerization at temperatures of from 40 to 150°C and pressures of from 0.1 to 20 MPa in the presence of a polymerization catalyst in a polymerization reactor cascade comprising a fluidized-bed reactor and a multizone circulating reactor, in which multizone circulating reactor the growing polymer particles flow upward through a first polymerization zone under fast fluidization or transport conditions, leave said first polymerization zone and enter a second polymerization zone through which they flow downward under the action of gravity, leave said downcomer and are reintroduced into the riser, thus establishing a circulation of polymer,
wherein the polymerization in the multizone circulating reactor is carried out in the presence of a combination of
- a hydroxyester having at least one free hydroxyl group, obtained from reacting a polyalcohol with a carboxylic acid having from 4 to 22 carbon atoms and
- an ethoxylated alkylamine or ethoxylated alkylamide comprising an alkyl group of from 2 to 20 carbon atoms
where the total amount of hydroxyester fed to the multizone circulating reactor and to any upstream polymerization reactor is from 3 to 300 ppm with respect to the total amount of olefins fed to the multizone circulating reactor and to any upstream polymerization reactor and the amount of ethoxylated alkylamine or ethoxylated alkylamide fed to the multizone circulating reactor and to any upstream polymerization is from 5 to 1000 ppm with respect to the total amount of olefins fed to the multizone circulating reactor and to any upstream polymerization reactor.

2. A process for preparing a polyolefin polymer according to claim 1, wherein the polyolefin polymer is a multimodal polyolefin polymer.

3. A process for preparing a polyolefin polymer according to claim 1 or claim 2, wherein the fluidized-bed reactor is arranged upstream of the multizone circulating reactor.

4. A process for preparing a polyolefin polymer according claim 3, wherein the ethoxylated alkylamine or ethoxylated alkylamide is fed to the fluidized-bed reactor and the hydroxyester is fed directly to the multizone circulating reactor or both the hydroxyester and the ethoxylated alkylamine or ethoxylated alkylamide are fed to the fluidized-bed reactor.

5. A process for preparing a polyolefin polymer according to any of claims 1 to 4, wherein a lower molecular weight polyolefin polymer component is obtained in the fluidized-bed reactor and a higher molecular weight polyolefin polymer component is obtained in the multizone circulating reactor.

6. A process for preparing a polyolefin polymer according to any of claims 1 to 5, wherein the hydroxyester is glycerol monolaurate, glycerol monomyristate, glycerol monopalmitate, glycerol monostearate, glycerol monooleate or glycerol monoricinoleate.

7. A process for preparing a polyolefin polymer according to any of claims 1 to 6, wherein the polymerization is carried out in the presence of an ethoxylated alkylamine which is an N-alkyl diethanolamine of the general formula CH₃(CH)ₙCH₂-N(CH₂CH₂OH)₂, in which n is from 2 to 20.

8. A process for preparing a polyolefin polymer according to any of claims 1 to 7, wherein the polyolefin polymer is a polyethylene prepared by homopolymerizing ethylene or copolymerizing ethylene and up to 20 wt.-% of C₃-C₈-1-alkenes.

9. A process for preparing a polyolefin polymer according to claim 8, wherein a polyethylene having a MFR_{21.6} at a temperature of 190°C under a load of 21.6 kg in the range of from 1.5 g/10 min to 35 g/10 min is prepared.

10. A process for preparing a polyolefin polymer according to claim 8 or claim 9, wherein a polyethylene having a density in the range of from 0.935 g/cm³ to 0,962 g/cm³ is prepared.
